(19)

Europäisches
Patentamt
European
Patent Office
Office européen
des brevets

(11) **EP 4 521 232 A1**

(12) **EUROPEAN PATENT APPLICATION**

(43) Date of publication:
12.03.2025 Bulletin 2025/11

(21) Application number: 24195503.8

(22) Date of filing: 20.08.2024

(51) International Patent Classification (IPC):
*G06F 7/58* (2006.01)   *G06F 7/76* (2006.01)
*H04L 9/00* (2022.01)

(52) Cooperative Patent Classification (CPC):
*G06F 7/58; G06F 7/76; H04L 9/003*

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.08.2023 US 202318240237

(71) Applicant: **STMicroelectronics International N.V.
1228 Plan-les-Ouates, Geneva (CH)**

(72) Inventors:
• **SIMON, Thierry
1970 Wezembeek-Oppem (BE)**
• **VAN KEER, Ronny
1560 Hoeilaart (BE)**

(74) Representative: **Cabinet Beaumont
4, Place Robert Schuman
B.P. 1529
38025 Grenoble Cedex 1 (FR)**

(54) **METHODS, SYSTEMS, AND APPARATUSES FOR PROTECTING HAMMING WEIGHT
COMPUTATIONS AGAINST SIDE-CHANNEL ATTACKS**

(57)    Various examples in accordance with the present disclosure provide example methods, systems, and apparatuses that may compute Hamming weight of a bit string.

## Description

## FIELD OF THE INVENTION

Example embodiments of the present disclosure relate to methods, systems and apparatuses that improve side-channel resistance of a Hamming weight computation and can be used, for example, to assess random number generation used by cryptographic algorithms.

## BACKGROUND

Applicant has identified many technical challenges and difficulties associated with protecting a Hamming weight computation against side-channel attacks.

## BRIEF SUMMARY

In accordance with some embodiments of the present disclosure, example methods for computing Hamming weight of an initial bit string are provided.

In some embodiments, an example method for computing a Hamming weight of an initial bit string comprises receiving, by a processor, the initial bit string, generating, by the processor, a shuffled bit string using the initial bit string, wherein the shuffled bit string results from a sequence of bit operations, and obtaining, by the processor, the Hamming weight of the initial bit string by computing the Hamming weight of the shuffled bit string.

In some embodiments, the sequence of bit operations comprises rotation operations and/or mixing operations.

In some embodiments, the sequence of bit operations is applied to the initial bit string.

In some embodiments, generating the shuffled bit string using the initial bit string comprises obtaining a plurality of masked strings by applying a mask function to the initial bit string, obtaining a plurality of shuffled masked strings by applying the same sequence of bit operations to each masked string of the plurality of masked strings, and obtaining the shuffled bit string by applying a reverse mask function to the plurality of shuffled masked strings.

In some embodiments, the initial bit string is outputted from a random number generator.

In some embodiments, the obtained Hamming weight is used to obtain assurance that a true random number generator (TRNG) is operating as designed and implemented.

In some embodiments, an example computing apparatus for computing a Hamming weight of an initial bit string is provided. In some embodiments, the computing apparatus comprises memory and one or more processors communicatively coupled to the memory, the one or more processors configured to: receive the initial bit string; generate a shuffled bit string using the initial bit string, wherein the shuffled bit string results from a sequence of bit operations; and obtain the Hamming weight of the initial bit string by computing the Hamming weight of the shuffled bit string.

In some embodiments, example non-transitory computer-readable storage media for computing a Hamming weight of an initial bit string is provided. In some embodiments, the example non-transitory computer-readable storage media includes instructions that, when executed by one or more processors, cause the one or more processors to: receive the initial bit string; generate a shuffled bit string using the initial bit string, wherein the shuffled bit string results from a sequence of bit operations; and obtain the Hamming weight of the initial bit string by computing the Hamming weight of the shuffled bit string.

The foregoing illustrative summary, as well as other exemplary objectives and/or advantages of the disclosure, and the manner in which the same are accomplished, are further explained in the following detailed description and its accompanying drawings.

## BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 provides an example schematic block diagram that illustrates example components associated with an example apparatus in accordance with some embodiments of the present disclosure;
FIG. 2 provides an example electronic circuit in accordance with some embodiments of the present disclosure;
FIG. 3 provides an example flow diagram that illustrates example steps and/or example operations associated with example methods in accordance with some embodiments of the present disclosure;
FIG. 4 provides an example flow diagram that illustrates an example method where shuffle functions are directly applied to the initial bit string;
FIG. 5 provides an example flow diagram that illustrates an example method where shuffle functions are directly applied to the masked string;
FIG. 6A provides an example memory map diagram that illustrates example bit operations associated with example methods in accordance with some embodiments of the present disclosure;
FIG. 6B provides an example memory map diagram that illustrates example bit operations associated with example methods in accordance with some embodiments of the present disclosure;

FIG. 6C provides an example memory map diagram that illustrates example bit operations associated with example methods in accordance with some embodiments of the present disclosure;

FIG. 6D provides an example memory map diagram that illustrates example bit operations associated with example methods in accordance with some embodiments of the present disclosure;

FIG. 6E provides an example memory map diagram that illustrates example bit operations associated with example methods in accordance with some embodiments of the present disclosure;

FIG. 6F provides an example memory map diagram that illustrates example bit operations associated with example methods in accordance with some embodiments of the present disclosure;

FIG. 6G provides an example memory map diagram that illustrates example bit operations associated with example methods in accordance with some embodiments of the present disclosure;

FIG. 6H provides an example memory map diagram that illustrates example bit operations associated with example methods in accordance with some embodiments of the present disclosure; and

FIG. 6I provides an example memory map diagram that illustrates example bit operations associated with example methods in accordance with some embodiments of the present disclosure.

## DETAILED DESCRIPTION OF THE INVENTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on," "based at least on," "based at least in part on," "based upon," and/or similar words are used herein interchangeably in an openended manner such that they do not necessarily indicate being based only on or based solely on the referenced element or elements unless so indicated. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with computing the Hamming weight of a bit string. For example, the Hamming weight of a bit string refers to the number of ones in the bit string and may be used to assess random number generation used by cryptographic algorithms. However, when calculating the Hamming weight of bits strings, there is a possibility that information related to the bit string may leak during manipulations through the side channel (e.g. based on power consumption, electromagnetic emissions, and/or the like).

Various embodiments of the present disclosure overcome the above technical challenges and difficulties, and provide various technical improvements and advantages. For example, various embodiments of the present disclosure may generate a shuffled bit string based at least in part on an initial bit string. In such an example, the shuffled bit string results from a sequence of bit operations. The sequence of the shuffled bit string is different from the sequence of the initial bit string. In other words, the shuffled bit string shuffles the bits in the initial bit string without changing the number of zeros and ones in the initial bit string. As such, the Hamming weight of the shuffled bit string is the same as the Hamming weight of the initial bit string. Continuing in such an example, the Hamming weight of the initial bit string may be obtained based on computing the Hamming weight of the shuffled bit string.

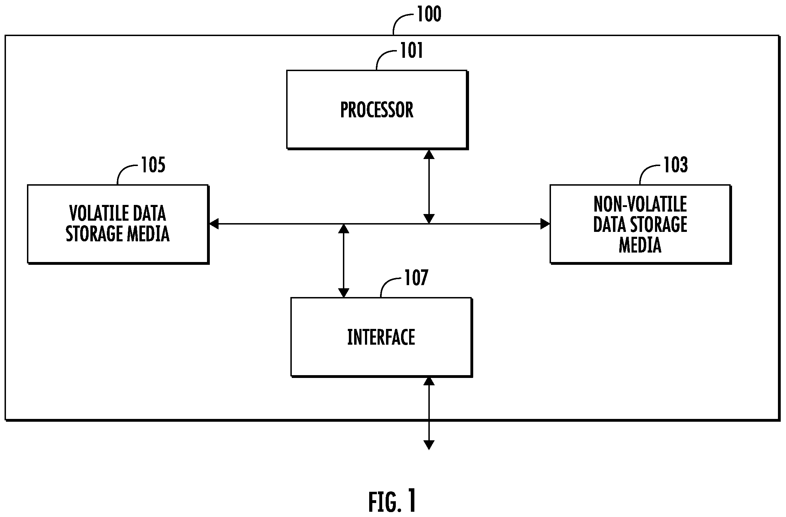

Referring now to FIG. 1, an example schematic diagram of an example apparatus 100 according to some embodiments of the present disclosure is illustrated.

In general, the terms "apparatus," "controller," "computing entity," "computer," "entity," "device," "system," and/or similar words used herein interchangeably refer to, for example, one or more computers, desktops, mobile phones, tablets, phablets, notebooks, laptops, distributed systems, kiosks, input terminals, servers, server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating, generating, monitoring, evaluating, comparing, and/or similar terms used herein interchangeably. In some embodiments, these functions, operations, and/or processes can be performed on data, content, information, and/or similar terms used herein interchangeably.

In some embodiments, the example apparatus 100 comprises, or is in communication with, one or more processors (also referred to as processors, processing circuitry, and/or similar terms used herein interchangeably) such as, but not limited to, the processor 101 that communicates with other elements within the example apparatus 100 (for example, but not limited to, via a bus), as shown in the example illustrated in FIG. 1. In some embodiments, the processor 101 may be embodied in a number of different ways. For example, the processor 101 may be embodied as one or more microcontrollers, microprocessors, controllers, multi-core processors, complex programmable logic devices (CPLDs), co-processing entities, application-specific instruction-set processors (ASIPs), and/or the like. Additionally, or alternatively, the processor 101 may be embodied as one or more other forms of processing devices or circuitry. In the present disclosure, the term "circuitry" may refer to an entirely hardware embodiment or a combination of hardware and computer program products. In some embodiments, the processor 101 may be embodied as integrated circuits, application specific integrated circuits (ASICs), field programmable gate arrays (FPGAs), programmable logic arrays (PLAs), hardware accelerators, other circuitry, and/or the like. In some embodiments, the processor 101 may be configured for a particular use or configured to execute instructions stored in the volatile data storage media 105, the non-volatile data storage media 103, and/or otherwise accessible to the processor 101. As such, whether configured by hardware or computer program products, or by a combination thereof, the processor 101 may be capable of performing steps or operations according to embodiments of the present disclosure when configured accordingly.

In some embodiments, the example apparatus 100 comprises, or is in communication with, non-volatile data storage media 103 (also referred to as non-volatile memory, non-volatile storage, non-volatile media, non-volatile memory storage, non-volatile memory circuitry and/or similar terms used herein interchangeably), as shown in the example illustrated in FIG. 1. In some embodiments, the non-volatile data storage media 103 may include, but not limited to, hard disks, read-only memory (ROM), programmable read-only memory (PROM), erasable programmable read-only memory (EPROM), electrically erasable programmable read-only memory (EEPROM), and/or the like. Additionally, or alternatively, in some embodiments, the non-volatile data storage media 103 may include, but not limited to, Hard Disk Drives (HDDs), Solid-State Drives (SSDs), flash memory (such as, but not limited to, Serial Flash Memory, NAND Flash Memory, NOR Flash Memory, and/or the like), multimedia memory cards (MMCs), secure digital (SD) memory cards, SmartMedia cards, CompactFlash (CF) cards, Memory Sticks, and/or the like. Additionally, or alternatively, the non-volatile data storage media 103 may include, but not limited to, Conductive-Bridging Random Access Memory (CBRAM), Phase-change RAM (PRAM), Ferroelectric RAM (FeRAM), Non-Volatile RAM (NVRAM), Magnetic RAM (MRAM), Resistive RAM (RRAM), Silicon-Oxide-Nitride-Oxide-Silicon (SONOS), Floating Junction Gate RAM (FJG RAM), millipede memory, racetrack memory, and/or the like.

In some embodiments, the non-volatile data storage media 103 may store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the example apparatus 100 comprises, or is in communication with, volatile data storage media 105 (also referred to as volatile memory, volatile storage, volatile media, volatile memory storage, volatile memory circuitry and/or similar terms used herein interchangeably), as shown in the example illustrated in FIG. 1. In some embodiments, the volatile storage or memory may also include, but not limited to, random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), and/or the like. In some embodiments, the volatile data storage media 105 may be used to store at least portions of the databases, database instances, database management systems, data, applications, programs, program modules, scripts, source code, object code, byte code, compiled code, interpreted code, machine code, executable instructions, and/or the like being executed by, for example, the processor 101. Thus, the databases, database instances, database management systems, data, applications, programs, program modules, scripts, source code, object code, byte code, compiled code, interpreted code, machine code, executable instructions, and/or the like may be used to control certain aspects of the operation of the example apparatus 100 with the assistance of the processor 101.

In some embodiments, the example apparatus 100 includes one or more interfaces including, but not limited to, interface 107 for communicating with at least one processor (for example, but not limited to, the processor 101 of FIG. 1 described above), volatile data storage media (for example, but not limited to the volatile data storage media 105 of FIG. 1 described above), non-volatile data storage media (for example, but not limited to, the non-volatile data storage media 103 of FIG. 1 described above), computing entity and/or other component. For example, the interface 107 may facilitate communicating data, content, information, and/or similar terms used herein interchangeably that can be transmitted, received, operated on, processed, displayed, stored, and/or the like. In some embodiments, such communication may be executed through the interface 107 according to a wired data transmission protocol, such as, but not limited to, Double Data Rate (DDR), Peripheral Component Interconnect (PCI), PCI Express, Serial Advanced Technology Attachment (Serial ATA), Fiber Distributed Data Interface (FDDI), Digital Subscriber Line (DSL), Ethernet, Asynchronous Transfer Mode (ATM), Non-Volatile Memory Express (NVMe), Small Computer system Interface (SCSI), Inter-Integrated Circuit (I2C), Serial Peripheral Interface (SPI), Universal Serial Bus (USB), frame relay, Data Over Cable Service Interface Specification (DOCSIS), and/or any other wired transmission protocol. Additionally, or alternatively, in some embodiments, the interface 107 may be configured to communicate via wireless external communication networks using any of a variety of protocols, such as, but not limited to, general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), Ultra-Wideband (UWB), infrared (IR) protocols, Near Field Communication (NFC) protocols, Wibree, Bluetooth protocols, wireless USB protocols, and/or any other wireless protocol.

While the description above provides example components of an example apparatus in accordance with some embodiments of the present disclosure, it is noted that the scope of the present disclosure is not limited to the description above. In some examples, an example apparatus 100 may comprise one or more additional and/or alternative components. For example, the example apparatus 100 may include, or be in communication with, one or more input elements such as, but not limited to, a keyboard input, a mouse input, a touch screen/display input, a motion input, a movement input, an audio input, a pointing device input, a joystick input, a keypad input, and/or the like. Additionally, or alternatively, the example apparatus 100 may include, or be in communication with, one or more output components such as, but not limited to, an audio output, a video output, a screen/display output, a motion output, a movement output, and/or the like. Additionally, or alternatively, the example apparatus 100 may include, or be in communication with, one or more other components.

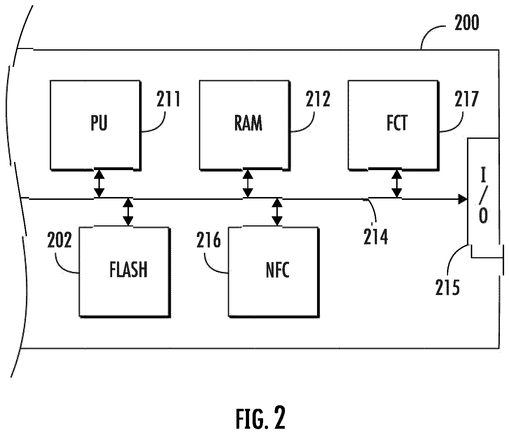

FIG. 2 schematically shows an embodiment of an electronic circuit 200 in the form of blocks that may implement example embodiments of the present disclosure.

In some embodiments, the electronic circuit 200 comprises a processing unit 211 (PU) for example, a state machine, a microprocessor, a programmable logic circuit, etc. In some embodiments, the electronic circuit 200 comprises one or more volatile storage areas 212 (for example, of RAM or register type) to temporarily store information (such as, but not limited to, instructions, addresses, data) during the processing. In some embodiments, the electronic circuit 200 comprises one or more non-volatile storage areas, including at least one flash-type memory 202 (FLASH) for durably storing information, in particular when the circuit is not powered. In some embodiments, the electronic circuit 200 comprises one or more data, address, and/or control buses 214 between the different elements internal to the electronic circuit 200. In some embodiments, the electronic circuit 200 comprises an input/output interface 215 (I/O) for communication (for example, of series bus type) with the outside of the electronic circuit 200.

In some embodiments, the electronic circuit 200 may also integrate a contactless communication circuit 216 (such as Contactless Frontend (CLF)) of near-field communication type (NFC). In some embodiments, the electronic circuit may integrate other functions, symbolized by a block 217 (as such functional circuit (FCT)), according to the application, for example, a crypto-processor, other interfaces, other memories, etc.

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a SSD, solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), CD-ROM, compact disc-rewritable (CD-RW), digital versatile disc (DVD), Blu-ray disc (BD), any other non-transitory optical medium, and/or the like. Such a non-volatile computer-readable storage medium may also include ROM, PROM, EPROM, EEPROM, flash memory (e.g., Serial, NAND, NOR, and/or the like), multimedia memory cards (MMC), secure digital (SD) memory cards, SmartMedia cards, CF cards, Memory Sticks, and/or the like. Further, a non-volatile computer-readable storage medium may also include CBRAM, PRAM, FeRAM, NVRAM, MRAM, RRAM, SONOS, FJG RAM, Millipede memory, racetrack memory, and/or the like.

In some embodiments, a volatile computer-readable storage medium may include RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

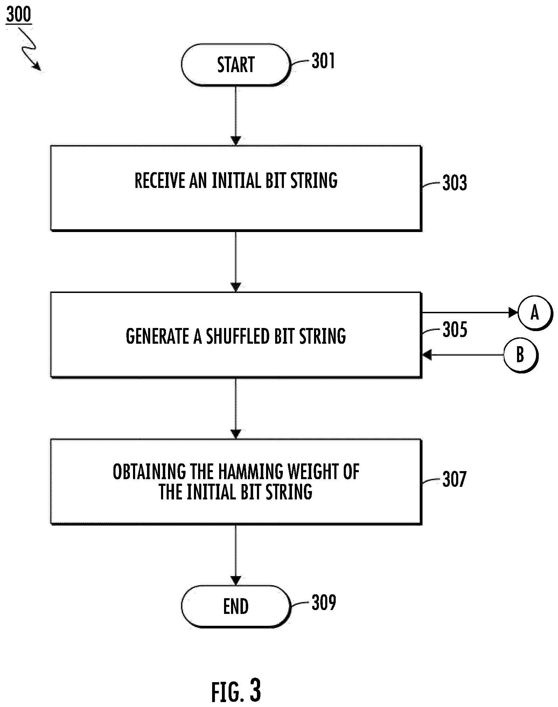

Various example methods described herein, including, for example, those as shown in FIG. 3 to FIG. 6I, may provide various technical advantages and/or improvements described above.

It is noted that each block of the flowchart, and combinations of blocks in the flowchart, may be implemented by various means such as hardware, firmware, circuitry and/or other devices associated with execution of software including one or more computer program instructions. For example, one or more of the methods described in FIG. 3 to FIG. 6I may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 3, an example flow diagram 300 illustrates example methods in accordance with some embodiments of the present disclosure.

As described above, there are technical challenges, deficiencies, and problems associated with data processing such as, but not limited to, calculating the Hamming weight of an initial bit string. Various embodiments of the present disclosure overcome the above technical challenges and difficulties, and provide various technical improvements and advantages. For example, example methods in accordance with the example flow diagram 300 shown in FIG. 3 may generate a shuffled bit string based at least in part on an initial bit string. In such an example, the sequence of the shuffled bit string is different from the sequence of the initial bit string. In other words, the shuffled bit string shuffles the bits in the initial bit string without changing the number of zeros and ones in the initial bit string. As such, the Hamming weight of the shuffled bit string is the same as the Hamming weight of the initial bit string, providing technical benefits and advantages such as, but not limited to, preventing leaking through side channel attacks when computing the Hamming weight.

In the example shown in FIG. 3, example methods in accordance with some embodiments of the present disclosure start at step/operation 301. Subsequent to and/or in response to step/operation 301, some example methods in accordance with some embodiments of the present disclosure proceed to step/operation 303. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may receive the initial bit string at step/operation 303.

For example, an example processor (such as, but not limited to, the processor 101 of the example apparatus 100 described above in connection with FIG. 1, the processing unit 211 of the example the electronic circuit 200 described above in connection with FIG. 2, and/or the like) may receive an initial bit string.

In the present disclosure, the term "bit" refers to a data unit in the form of a binary value (for example, either zero or one). In some embodiments, an initial bit string may comprise a plurality of bits. In such an example, the initial bit string may comprise one or more binary representations of data and/or information in the forms of zeros and ones.

In some embodiments, the initial bit string may indicate an initial sequence associated with a plurality of bits. In the present disclosure, the term "initial sequence" refers to an order, placement, arrangement, hierarchies, and/or the like of each bit in the initial bit string. For example, an example initial sequence associated with an initial bit string may indicate that the first bit in the initial bit string is zero, the second bit in the initial bit string is one, the third bit in the initial bit string is zero, etc.

As an optional example, an example random number generator in accordance with some embodiments of the present disclosure may generate one or more initial bit strings. In some embodiments, an example initial bit string from an example random number generator may comprise a string of bits. While the above description provides an optional example, it is noted that the scope of the present disclosure is not limited to the example above.

Referring back to FIG. 3, subsequent to and/or in response to step/operation 303, some example methods in accordance with some embodiments of the present disclosure proceed to step/operation 305. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may generate a shuffled bit string at step/operation 305.

For example, an example processor (such as, but not limited to, the processor 101 of the example apparatus 100 described above in connection with FIG. 1, the processing unit 211 of the example the electronic circuit 200 described above in connection with FIG. 2, and/or the like) may generate a shuffled bit string based at least in part on the initial bit string received from step/operation 303.

In the present disclosure, the term "shuffled bit string" refers to a string of bits that comprises bits from the initial bit string received at step/operation 303, but the order, placement, arrangement, hierarchies and/or the like of one or more of the bits have been shuffled.

For example, the shuffled bit string indicates a shuffled sequence associated with the plurality of bits. In such an example, the term "shuffled sequence" refers to one or more orders, placements, arrangements, hierarchies, and/or the like of each bit in the shuffled bit string. As described above, the initial bit string received at step/operation 303 may indicate an initial sequence associated with a plurality of bits. In some embodiments, the shuffled sequence associated with the plurality of digits in the shuffled bit string generated at step/operation 305 is different from the initial sequence associated with the plurality of bits in the initial bit string received at step/operation 303.

In some embodiments, the shuffled bit string may be referred to as a shuffled arrangement of the initial bit string. For example, the shuffled bit string may comprise the same number of ones as the number of ones in the initial bit string, as well as the same number of zeros as the number of zeros in the initial bit string. However, one or more ones and/or one or more zeros in the initial bit string have been shuffled to generate the shuffled bit string.

In some embodiments, the shuffled bit string may be obtained through applying a sequence of bit operations on the initial bit string. As an example, the sequence of bit operations may be directly applied in the initial bit string. As another example, the sequence of bit operations may be applied on the masked strings.

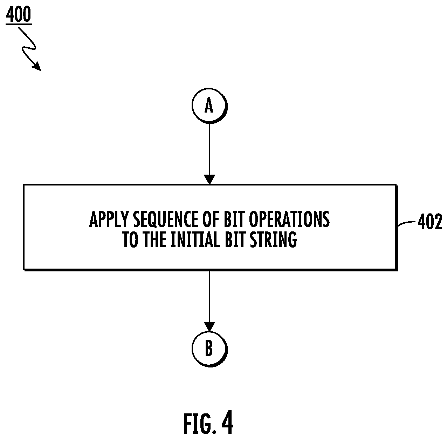

Additional details associated with the generating the shuffled bit string are described herein, including, but not limited to, those described in connection with at least FIG. 4 to FIG. 6I.

Referring back to FIG. 3, subsequent to and/or in response to step/operation 305, some example methods in accordance with some embodiments of the present disclosure proceed to step/operation 307. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may obtain the Hamming weight of the initial bit string at step/operation 307.

In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may obtain the Hamming weight of the initial bit string (which is received at step/operation 303) based at least in part on the shuffled bit string that is generated at step/operation 305. As described above, in some embodiments, an example Hamming weight associated with a bit string may represent a total number of ones in the bit string. As described above, the shuffled bit string generated at step/operation 305 has the same number of ones as the number of ones in the initial bit string obtained at step/operation 303. As such, the Hamming weight of the shuffled bit string is the same as the Hamming weight of the initial bit string.

Directly computing the Hamming weight of the initial bit string without shuffling tends to leak more in the side channel because it requires manipulating the initial bit string few bits at a time. On the other hand, shuffling of the initial bit string in accordance with some embodiments of the present disclosure can be done with operations that manipulate more bits of the initial bit string simultaneously, which reduces leakage through the side channel. As such, various embodiments of the present disclosure provide technical benefits and advantages such as, but not limited to, protecting Hamming weight computations against side channel attacks.

In some embodiments, the obtained Hamming weight may be used to obtain assurance that a true random number generator (TRNG) is operating as designed and implemented. As an example, if a TRNG is operating as designed and implemented, the obtained Hamming weight associated with an initial bit string with a length n from the TRNG may be at or approximate n/2. If the obtained Hamming weight is at or approximate n/2, an example processor may determine that obtained Hamming weight provides assurance that the TRNG is operating as designed and implemented.

Referring back to FIG. 3, subsequent to and/or in response to step/operation 307, some example methods in accordance with some embodiments of the present disclosure proceed to step/operation 309 and end.

Referring now to FIG. 4, an example flow diagram 400 illustrates example methods in accordance with some embodiments of the present disclosure.

As described above, there are technical challenges, deficiencies, and problems associated with data processing such as, but not limited to, security risks due to side channel attacks during Hamming weight computation. Various embodiments of the present disclosure overcome the above technical challenges and difficulties, and provide various technical improvements and advantages. For example, example methods in accordance with the example flow diagram 400 shown in FIG. 4 may generate a shuffled bit string based at least in part on applying a sequence of bit operations to the initial bit string.

The example flow diagram 400 shown in FIG. 4 starts at block A, which is connected to the step/operation 305 of FIG. 3 where an example processor (such as, but not limited to, the processor 101 of the example apparatus 100 described above in connection with FIG. 1, the processing unit 211 of the example the electronic circuit 200 described above in connection with FIG. 2, and/or the like) generates a shuffled bit string. As such, the example flow diagram 400 shown in FIG. 4 illustrates example methods associated with generating shuffled bit strings.

In some embodiments, subsequent to and/or in response to block A, some example methods in accordance with some embodiments of the present disclosure proceed to step/operation 402. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may apply a sequence of bit operations to the initial bit string at step/operation 402.

In some embodiments, the sequence of bit operations comprises at least one bit operation that manipulates one or more bits in a string. In some embodiments, the sequence of bit operations may generate a larger number of shuffling, providing technical benefits and advantages such as, but not limited to, more secure computation of the Hamming weight.

In some embodiments, the sequence of bit operations comprises one or more Boolean operations such as, but not limited to, rotation operations, mixing operations, and/or XOR operations, additional details of which are described herein. For example, the sequence of bit operations at step/operation 402 comprises rotation operations and/or mixing operations.

In the present disclosure, the terms "rotation operation," "bitwise rotation," and "circular shift" refers to a type of bit operation that moves one or more bits of a string (for example, a small part of the initial sequence (depending on the size of the architecture) and not on the whole initial sequence) to the left or to the right by a certain number of places (that is defined by an offset), with the overflow or the underflow of bits from one end being transferred to the other end of the part of the initial sequence. In particular, overflow refers to moving bit(s) from the left end of the bit string to the right end of the bit string, and underflow refers to moving bit(s) from the right end of the bit string to the left end of the bit string.

On most architectures, the rotation operation manipulates a lot of output bits simultaneously (for example, 32-bits on ARMv6-M and ARMv7-M architectures). The amount of manipulation is more than those in a Hamming weight computation, and therefore various embodiments of the present disclosure provide more robust protection against side channel attacks.

For example, an example processor (such as, but not limited to, the processor 101 of the example apparatus 100 described above in connection with FIG. 1, the processing unit 211 of the example the electronic circuit 200 described above in connection with FIG. 2, and/or the like) may perform a rotation operation on initial bit string at step/operation 402 to move each bit in the initial bit string to the right by a number of places according to the offset, with the underflow bits moving to the left end of the bit string.

While the description above provides an example rotation operation, it is noted that the scope of the present disclosure is not limited to the description above.

In the present disclosure, the term "mixing operation" refers to a type of bit operation that swaps, switches, and/or interchanges bits of a string. For example, an example swapping operation may switch one bit in the bit string with another bit in the bit string. This can be implemented on most architectures in a manner where a lot of bits of the sequence are manipulated simultaneously and can thus be made robust against side-channel attacks. For example, on a 32-bit architecture, it can be implemented by always manipulating 16 bits of the sequence at the same time.

For example, an example processor (such as, but not limited to, the processor 101 of the example apparatus 100 described above in connection with FIG. 1, the processing unit 211 of the example the electronic circuit 200 described above in connection with FIG. 2, and/or the like) may perform a mixing operation on initial bit string at step/operation 402 to swap bits that are in even positions in the initial bit string with bits that are in odd positions in the initial bit string.

While the description above provides an example mixing operation, it is noted that the scope of the present disclosure is not limited to the description above.

In some embodiments, subsequent to and/or in response to step/operation 402, some example methods in accordance with some embodiments of the present disclosure proceed to block B, which is connected back to the step/operation 305 of FIG. 3.

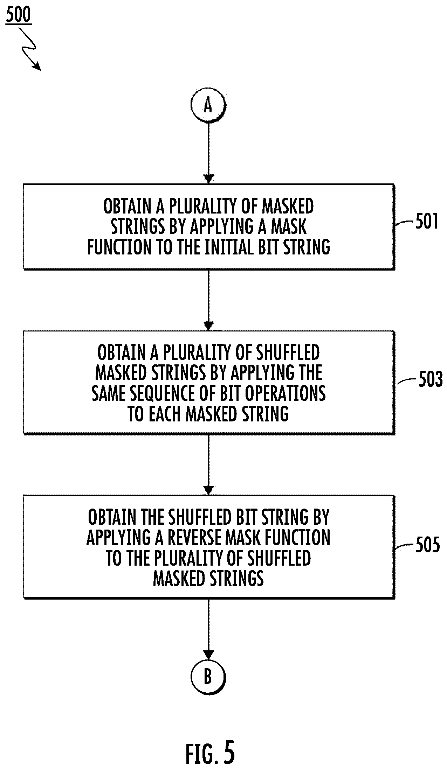

Referring now to FIG. 5, an example flow diagram 500 illustrates example methods in accordance with some embodiments of the present disclosure.

As described above, there are technical challenges, deficiencies, and problems associated with data processing such as, but not limited to, security risks due to side channel attacks during Hamming weight computation. Various embodiments of the present disclosure overcome the above technical challenges and difficulties, and provide various technical improvements and advantages. For example, example methods in accordance with the example flow diagram 500 shown in FIG. 5 may generate a shuffled bit string based at least in part on applying a sequence of bit operations to the initial bit string.

The example flow diagram 500 shown in FIG. 5 starts at block A, which is connected to the step/operation 305 of FIG. 3 where an example processor (such as, but not limited to, the processor 101 of the example apparatus 100 described above in connection with FIG. 1, the processing unit 211 of the example the electronic circuit 200 described above in connection with FIG. 2, and/or the like) generates a shuffled bit string. As such, the example flow diagram 500 shown in FIG. 5 illustrates example methods associated with generating shuffled bit strings.

In some embodiments, subsequent to and/or in response to block A, some example methods in accordance with some embodiments of the present disclosure proceed to step/operation 501. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may obtain a plurality of masked strings by applying a mask function to the initial bit string at step/operation 501.

In some embodiments, the term "mask function" refers to a function that masks one or more bits of the initial bit string. For example, a mask function may selectively hide, reveal, and/or transform one or more specific portions of the initial bit string based on one or more predetermined criteria to generate a plurality of masked strings.

For example, an example mask function may comprise an XOR operation. In the present disclosure, the terms "XOR" and "exclusive OR" refers to a type of bit operation that compares two inputs (for example, two binary bits) and produces an output based on the difference between the two inputs. If the two inputs are identical (for example, if both inputs are zeros or both inputs are ones), the XOR operation returns zero. If the two inputs are different (for example, if one input is zero and one input is one), the XOR operation returns one. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may perform an example mask function by performing an example XOR operation between the initial bit string and another bit string.

While the description above provides an example mask function, it is noted that the scope of the present disclosure is not limited to the description above.

In some embodiments, subsequent to and/or in response to step/operation 501, some example methods in accordance with some embodiments of the present disclosure proceed to step/operation 503. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may obtain a plurality of shuffled masked strings by applying the same sequence of bit operations to each masked string at step/operation 503.

For example, the example processor may apply the same rotation operations and/or the same mixing operations on each of the masked strings that are obtained at step/operation 501.

In some embodiments, subsequent to and/or in response to step/operation 503, some example methods in accordance with some embodiments of the present disclosure proceed to step/operation 501. In some embodiments, an example processor (such as, but not limited to, the processor 101 of the example apparatus 100 described above in connection with FIG. 1, the processing unit 211 of the example the electronic circuit 200 described above in connection with FIG. 2, and/or the like) may obtain the shuffled bit string by applying a reverse mask function to the plurality of shuffled masked strings at step/operation 505.

In some embodiments, the reverse mask function may comprise an XOR operation. Because the XOR operation is its own reverse, performing an XOR operation on the shuffled masked strings results in a shuffled bit string that has the same number of ones as the number of ones in the initial bit string, but bits in the shuffled bit string are rearranged from bits in the initial bit string.

In some embodiments, subsequent to and/or in response to step/operation 505, some example methods in accordance with some embodiments of the present disclosure proceed to block B, which is connected back to the step/operation 305 of FIG. 3.

Example methods in accordance with various embodiments of the present disclosure provide various technical benefits and advantages. For example, shuffling bits within a bit string (for example, a 32-bit word W) does not modify the Hamming weight of the bit string because the number of ones in the bit string that have been shuffled is the same as the number of ones in the bit string prior to being shuffled. If the Hamming weight of the word $HW(w) = h$, then the total number M of different ways to shuffle the 32-bit word W may be calculated based on the following equation:

$$M = \binom{32}{h} = \frac{32!}{h!(32-h)!}$$

In the above equation, the ! symbol refers to the factorial operation.

Thanks to the large number of ways to generate a shuffled bit string based on the initial bit string, it would be impossible for a third-party application to recover or predict the initial bit string based on the shuffled bit string.

In some embodiments, the example shuffling operations may be computed on a generic 32-bit central processing unit (CPU) using instructions that may manipulate at least 16 bits at the time. In such an example, an unauthorized party has to distinguish between at least 2^16=65536 different patterns (while example methods of the present disclosure do not need to perform 65536 shuffles). As such, examples of the present disclosure provide a technically improved solution than a Hamming weight computation that manipulates four or eight bits.

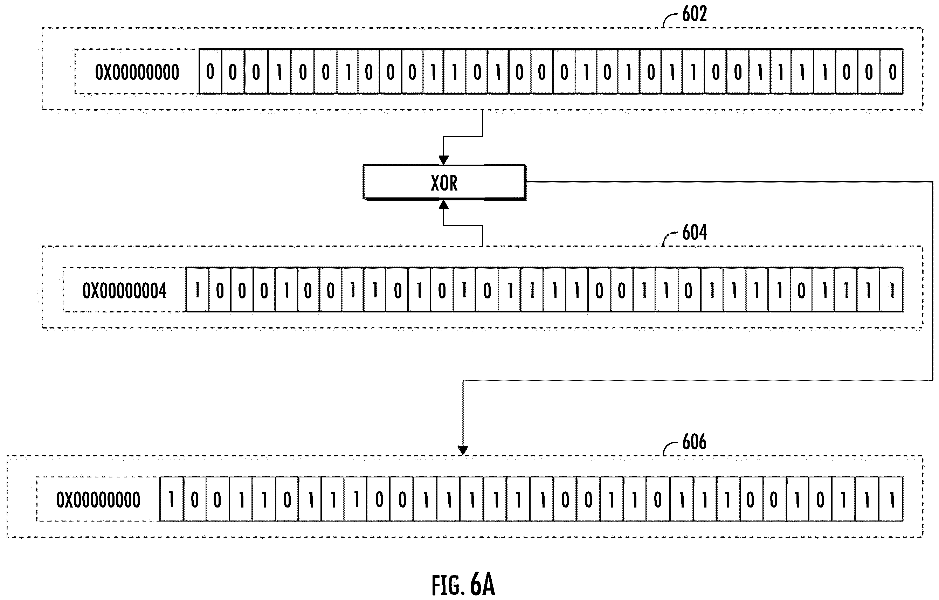

Referring now to FIG. 6A to FIG. 6I, example memory map diagrams in accordance with some embodiments of the present disclosure are illustrated.

As described above, there are technical challenges, deficiencies, and problems associated with data processing such as, but not limited to, security risks due to side channel attacks during Hamming weight computation. Various embodiments of the present disclosure overcome the above technical challenges and difficulties, and provide various technical improvements and advantages. For example, example methods in accordance with the example memory map diagrams shown in FIG. 6A to FIG. 6I may generate a shuffled bit string based at least in part on applying a sequence of bit operations to the initial bit string.

In particular, FIG. 6A illustrates generating an example masked string 606 based on performing a mask operation (such as, but not limited to, an XOR operation) between the initial bit string 602 (stored in the memory address 0x00000000) and a bit string 604 (stored in the memory address 0x00000004). The example masked string 606 replaces the initial bit string 602 stored in the memory address 0x00000000. The following programming codes in the C language provide an example in accordance with FIG. 6A:

word ^= mask

In the above example, "mask" refers to the bit string 604 stored in the memory address 0x00000004, and "word" refers to the bit string stored in the memory address 0x00000000. After the above masking operation, the "word" becomes a masked string.

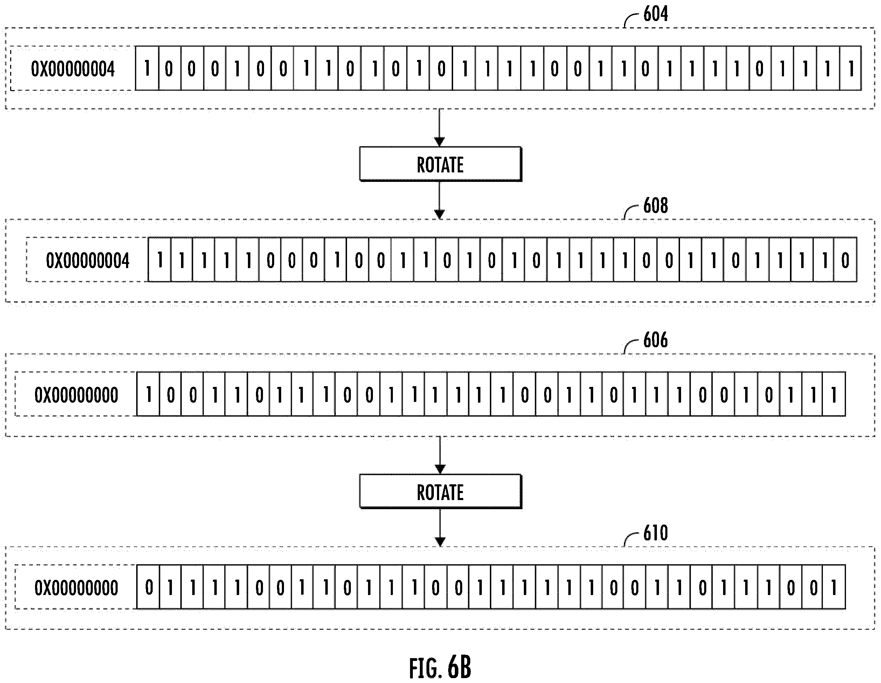

FIG. 6B illustrates generating a rotated bit string 608 based at least in part on performing a rotation operation on the bit string 604 by an offset (for example, rotate four bits to the right), and generating a rotated masked string 610 based at least in part on performing a rotation operation on the masked string 606 by an offset (for example, rotate four bits to the right). The following programming codes in the C language provide an example method in accordance with FIG. 6B:

mask = ror(mask, offset);

masked = ror(masked, offset);

In the above example, "mask" refers to the bit string 604 stored in the memory address 0x00000004, and "masked" refers to the masked string stored in the memory address 0x00000000.

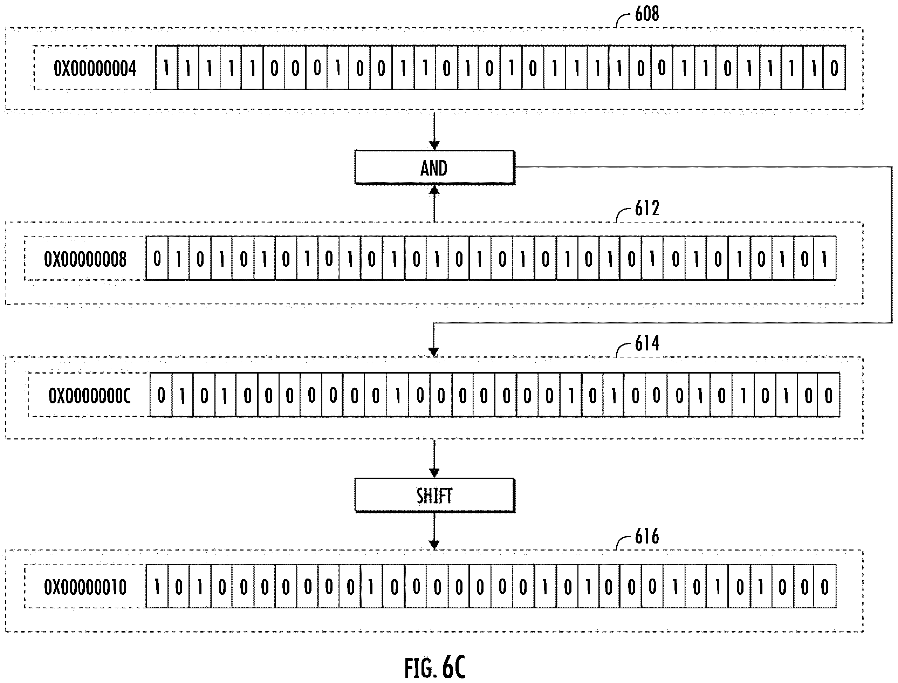

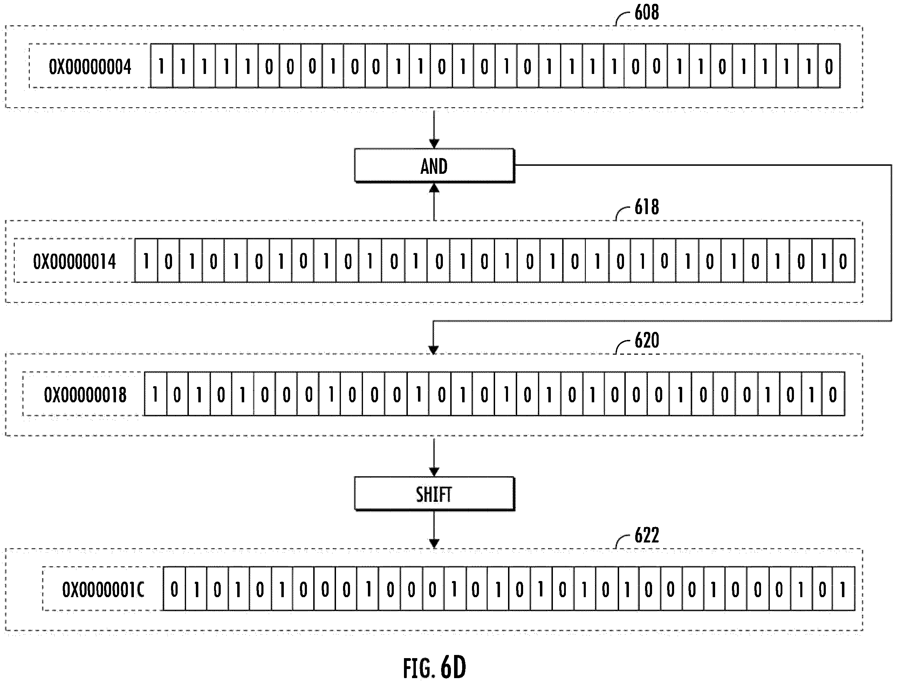

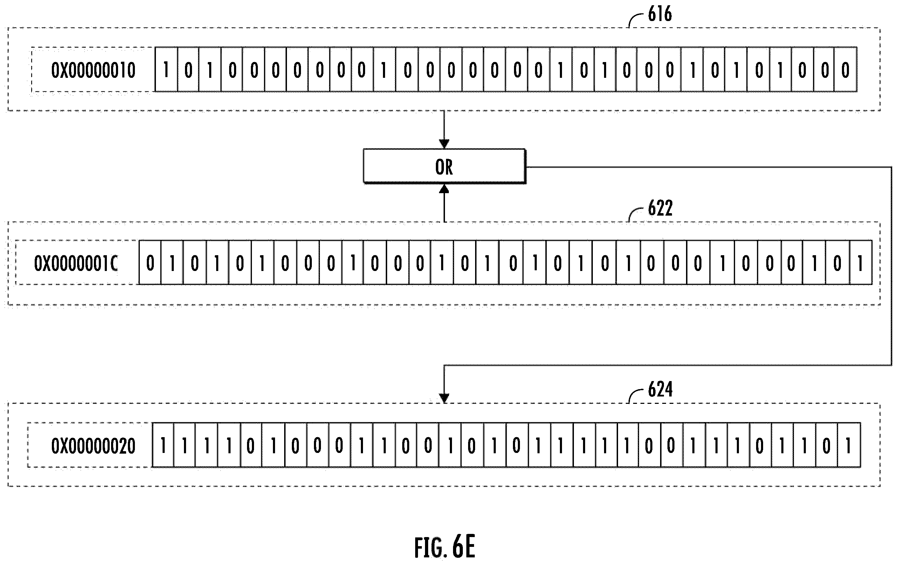

FIG. 6C, FIG. 6D, and FIG. 6E illustrate example mixing operations associated with the rotated bit string 608 in accordance with some embodiments of the present disclosure.

In the examples shown in FIG. 6C to FIG. 6E, an example processor (such as, but not limited to, the processor 101 of the example apparatus 100 described above in connection with FIG. 1, the processing unit 211 of the example the electronic circuit 200 described above in connection with FIG. 2, and/or the like) may performing mixing operations on the rotated bit string based at least in part on dividing the rotated bit string into two portions, shifting bits within each of the two portions, and combining the two portions.

For example, the following programming codes in the C language provide an example method in accordance with FIG. 6C:

(mask & 0x55555555) << 1u

In the above example, "mask" refers to the rotated bit string 608 stored in the memory address 0x00000004, and the bit string 612 ("0x55555555") is stored in the memory address 0x00000008. Continuing in this example, the example processor performs an AND operation between the rotated bit string 608 and the bit string 612 such that bits in the even locations in the rotated bit string 608 are blocked to generate the bit string 614. Subsequently, the example processor causes the bit string 614 to shift by 1 bit to the left to generate the bit string 616.

The following programming codes in the C language provide an example in accordance with FIG. 6D:

(mask & 0xaaaaaaaa) >> 1u

In the above example, "mask" refers to the rotated bit string 608 stored in the memory address 0x00000004, and the bit string 618 ("0xaaaaaaaa") is stored in the memory address 0x00000014. Continuing in this example, the example processor performs an AND operation between the rotated bit string 608 and the bit string 618 such that bits in the odd locations in the rotated bit string 608 are blocked to generate the bit string 620. Subsequently, the example processor causes the bit string 620 to shift by 1 bit to the right to generate the bit string 622.

In the example shown in FIG. 6E, an example processor generates an example mixed bit string 624 based at least in part on performing an OR operation between the bit string 616 and the bit string 622.

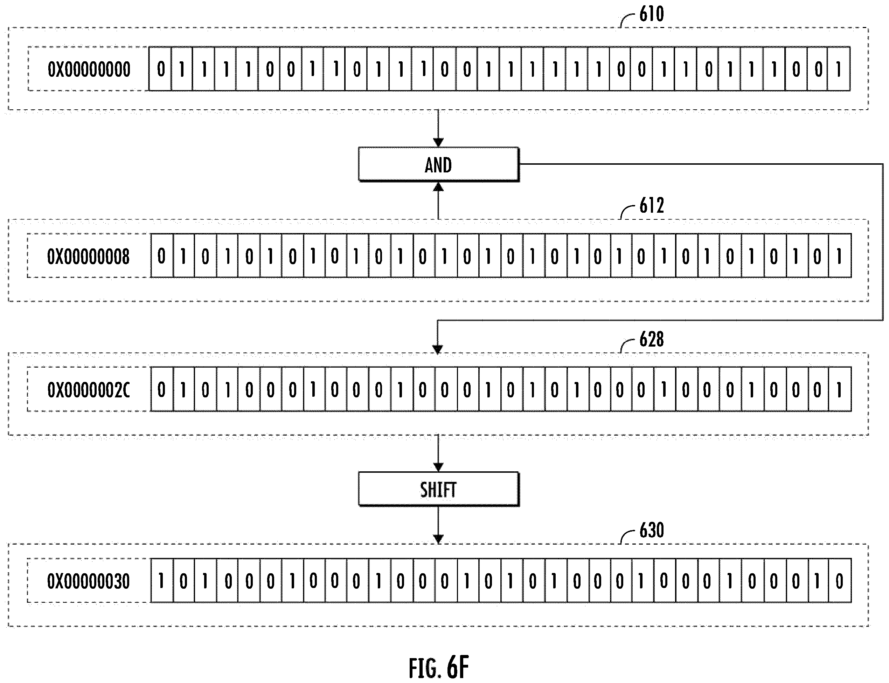

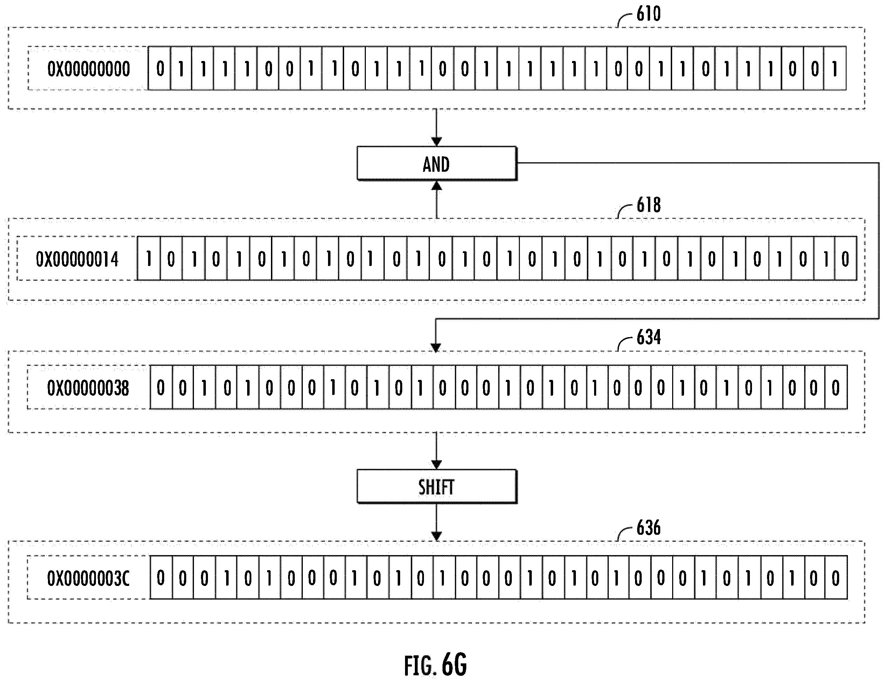

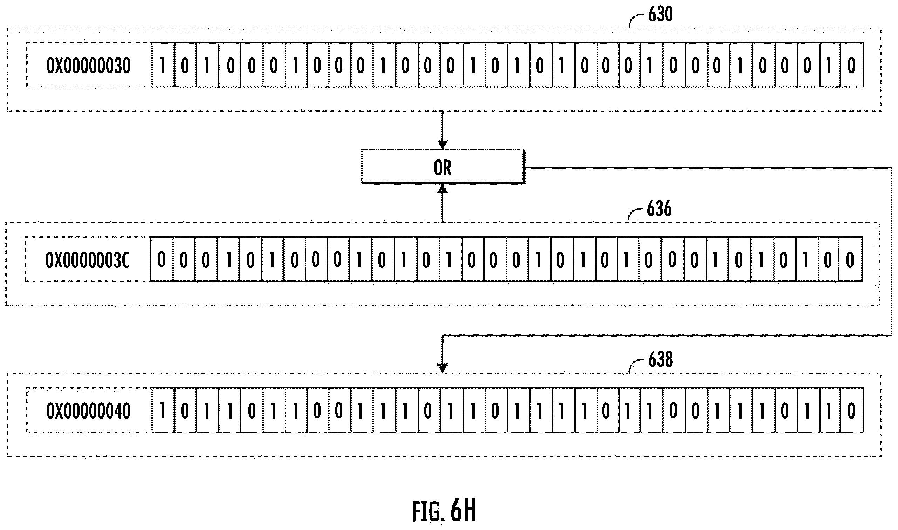

FIG. 6F, FIG. 6G, and FIG. 6H illustrate example mixing operations associated with an example mask in accordance with some embodiments of the present disclosure.

In the examples shown in FIG. 6F to FIG. 6H, an example processor (such as, but not limited to, the processor 101 of the example apparatus 100 described above in connection with FIG. 1, the processing unit 211 of the example the electronic circuit 200 described above in connection with FIG. 2, and/or the like) may performing mixing operations on the example masked string based at least in part on dividing the example masked string into two portions, shifting bits within each of the two portions, and combining the two portions.

For example, the following programming codes in the C language provides an example method in accordance with FIG. 6F:

(masked & 0x55555555) << 1u

In the above example, "masked" refers to the rotated masked string 610 stored in the memory address 0x00000000, and the bit string 612 ("0x55555555") is stored in the memory address 0x00000008. Continuing in this example, the example processor performs an AND operation between the rotated masked string 610 and the bit string 612 such that bits in the even locations in the rotated masked string 610 are blocked to generate the bit string 628. Subsequently, the example processor causes the bit string 628 to shift by 1 bit to the left to generate the bit string 630.

The following programming codes in the C language provides an example in accordance with FIG. 6G:

(masked & 0xaaaaaaaa) >> 1u

In the above example, "masked" refers to the rotated masked string 610 stored in the memory address 0x00000000, and the bit string 618 ("0xaaaaaaaa") is stored in the memory address 0x00000014. Continuing in this example, the example processor performs an AND operation between the rotated masked string 610 and the bit string 618 such that bits in the odd locations in the rotated masked string 610 are blocked to generate the bit string 634. Subsequently, the example processor causes the bit string 634 to shift by 1 bit to the right to generate the bit string 636.

In the example shown in FIG. 6H, an example processor generates an example mixed masked string 638 based at least in part on performing an OR operation between the bit string 630 and the bit string 636.

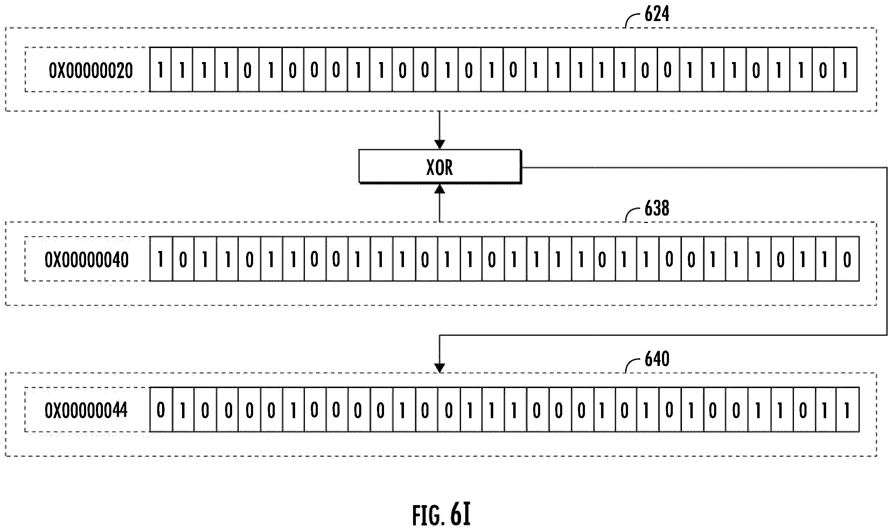

FIG. 6I illustrates generating a shuffled bit string 640 based at least in part on performing a reverse mask function (for example, but not limited to, an XOR operation) between the mixed bit string 624 and the mixed masked string 638. The following programming codes in the C language provides an example in accordance with FIG. 6I:

unmasked = mask ^ masked;

In the above example, "unmasked" refers to the shuffled bit string 640, "mask" refers to the mixed bit string 624, and "masked" refers to the mixed masked string 638.

As illustrated in the examples shown in FIG. 6A to FIG. 6I, example methods in accordance with some embodiments of the present disclosure may perform mixing operations on rotated bit string and rotated masked string by implementing a pair of complement bit strings (for example, the bit string 612 and the bit string 618). In particular, each of the complement bit strings block every 2n bits in the rotated mask and rotated masked string, where the value of n starts from zero. Continuing in this example, subsequent to separately applying each of the pair of complement bit strings to generate new strings, example methods may cause shifting the new strings by a number of bits corresponding to the value of n and towards the direction.

While the description above in connection with FIG. 6A to FIG. 6I illustrates example bit operations, it is noted that the scope of the present disclosure is not limited to the description above.

While this detailed description has set forth some embodiments of the present invention, the appended claims also cover other embodiments of the present invention which may differ from the described embodiments according to various modifications and improvements. For example, in some embodiments, example sequences of bit operations may comprise one or more additional and/or alternative rotation operations and/or mix operations in accordance with some embodiments of the present disclosure.

Within the appended claims, unless the specific term "means for" or "step for" is used within a given claim, it is not intended that the claim be interpreted under 35 U.S.C. 112, paragraph 6.

**Claims**

1. A method for computing a Hamming weight of an initial bit string comprising:

    receiving, by a processor, the initial bit string;
    generating, by the processor, a shuffled bit string using the initial bit string, wherein the shuffled bit string results from a sequence of bit operations; and
    obtaining, by the processor, the Hamming weight of the initial bit string by computing the Hamming weight of the shuffled bit string.

2. A computing apparatus for computing a Hamming weight of an initial bit string, the computing apparatus comprising memory and one or more processors communicatively coupled to the memory, the one or more processors configured to:

    receive the initial bit string;
    generate a shuffled bit string using the initial bit string, wherein the shuffled bit string results from a sequence of bit operations; and
    obtain the Hamming weight of the initial bit string by computing the Hamming weight of the shuffled bit string.

3. One or more non-transitory computer-readable storage media for computing a Hamming weight of an initial bit string, the one or more non-transitory computer-readable storage media including instructions that, when executed by one or more processors, cause the one or more processors to:

    receive the initial bit string;
    generate a shuffled bit string using the initial bit string, wherein the shuffled bit string results from a sequence of bit operations; and
    obtain the Hamming weight of the initial bit string by computing the Hamming weight of the shuffled bit string.

4. The method of claim 1 or the computing apparatus of claim 2, or the non-transitory computer-readable storage media of claim 3, wherein the sequence of bit operations is applied to the initial bit string.

5. The method of claim 1 wherein generating the shuffled bit string using the initial bit string comprises, or the computing apparatus of claim 2 wherein, when generating the shuffled bit string using the initial bit string, the one or more processors are configured to, or the non-transitory computer-readable storage media of claim 3 wherein, when generating the shuffled bit string using the initial bit string, the one or more processors are configured to:

    obtaining a plurality of masked strings by applying a mask function to the initial bit string;
    obtaining a plurality of shuffled masked strings by applying the same sequence of bit operations to each masked string of the plurality of masked strings; and
    obtaining the shuffled bit string by applying a reverse mask function to the plurality of shuffled masked strings.

6. The method of claim 1, 4 or 5, or the computing apparatus of claim 2, 4 or 5, or the non-transitory computer-readable storage media of any of claims 3 to 5, wherein the sequence of bit operations comprises rotation operations and/or mixing operations.

7. The method of any of claims 1, 4 to 6, or the computing apparatus of any of claims 2, 4 to 6, or the non-transitory computer-readable storage media of any of claims 3 to 6, wherein the initial bit string is outputted from a random number generator.

8. The method of any of claims 1, 4 to 7, or the computing apparatus of any of claims 2, 4 to 7, or the non-transitory computer-readable storage media of any of claims 3 to 7, wherein the obtained Hamming weight is used to obtain assurance that a true random number generator (TRNG) is operating as de-

signed and implemented.

FIG. 1

EP 4 521 232 A1

FIG. 2

300

START — 301

RECEIVE AN INITIAL BIT STRING — 303

GENERATE A SHUFFLED BIT STRING — 305

A

B

OBTAINING THE HAMMING WEIGHT OF
THE INITIAL BIT STRING — 307

END — 309

FIG. 3

400

A

APPLY SEQUENCE OF BIT OPERATIONS
TO THE INITIAL BIT STRING — 402

B

FIG. 4

500

A

OBTAIN A PLURALITY OF MASKED
STRINGS BY APPLYING A MASK
FUNCTION TO THE INITIAL BIT STRING — 501

OBTAIN A PLURALITY OF SHUFFLED
MASKED STRINGS BY APPLYING THE
SAME SEQUENCE OF BIT OPERATIONS
TO EACH MASKED STRING — 503

OBTAIN THE SHUFFLED BIT STRING BY
APPLYING A REVERSE MASK FUNCTION
TO THE PLURALITY OF SHUFFLED
MASKED STRINGS — 505

B

FIG. 5

602

| 0X00000000 | 0 | 0 | 0 | 1 | 0 | 0 | 1 | 0 | 0 | 0 | 1 | 1 | 0 | 1 | 0 | 0 | 0 | 1 | 0 | 1 | 0 | 1 | 1 | 0 | 0 | 1 | 1 | 1 | 1 | 0 | 0 | 0 |

XOR

604

| 0X00000004 | 1 | 0 | 0 | 0 | 1 | 0 | 0 | 1 | 1 | 0 | 1 | 0 | 1 | 0 | 1 | 1 | 1 | 1 | 0 | 0 | 1 | 1 | 0 | 1 | 1 | 1 | 1 | 0 | 1 | 1 | 1 | 1 |

606

| 0X00000000 | 1 | 0 | 0 | 1 | 1 | 0 | 1 | 1 | 1 | 0 | 0 | 1 | 1 | 1 | 1 | 1 | 1 | 0 | 0 | 1 | 1 | 0 | 1 | 1 | 1 | 0 | 0 | 1 | 0 | 1 | 1 | 1 |

FIG. 6A

EP 4 521 232 A1

EP 4 521 232 A1

604

| 0X00000004 | 1 | 0 | 0 | 0 | 1 | 0 | 0 | 1 | 1 | 0 | 1 | 0 | 1 | 0 | 1 | 1 | 1 | 1 | 0 | 0 | 1 | 1 | 0 | 1 | 1 | 1 | 1 | 0 | 1 | 1 | 1 | 1 |

ROTATE

608

| 0X00000004 | 1 | 1 | 1 | 1 | 0 | 0 | 0 | 1 | 0 | 0 | 1 | 1 | 0 | 1 | 0 | 1 | 0 | 1 | 1 | 1 | 1 | 0 | 0 | 1 | 1 | 0 | 1 | 1 | 1 | 1 | 0 |

606

| 0X00000000 | 1 | 0 | 0 | 1 | 1 | 0 | 1 | 1 | 1 | 0 | 0 | 1 | 1 | 1 | 1 | 1 | 0 | 0 | 1 | 1 | 0 | 1 | 1 | 0 | 0 | 1 | 0 | 1 | 1 | 1 |

ROTATE

610

| 0X00000000 | 0 | 1 | 1 | 1 | 1 | 0 | 0 | 1 | 1 | 0 | 1 | 1 | 0 | 0 | 1 | 1 | 1 | 1 | 1 | 1 | 0 | 0 | 1 | 1 | 0 | 1 | 1 | 1 | 0 | 0 | 1 |

FIG. 6B

608

| 0X00000004 | 1 | 1 | 1 | 1 | 1 | 0 | 0 | 0 | 1 | 0 | 0 | 1 | 1 | 0 | 1 | 0 | 1 | 0 | 1 | 1 | 1 | 1 | 0 | 0 | 1 | 1 | 0 | 1 | 1 | 1 | 1 | 0 |

AND

612

| 0X00000008 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 |

614

| 0X0000000C | 0 | 1 | 0 | 1 | 0 | 0 | 0 | 0 | 0 | 1 | 0 | 0 | 0 | 0 | 0 | 1 | 0 | 1 | 0 | 0 | 0 | 1 | 0 | 1 | 0 | 1 | 0 | 0 |

SHIFT

616

| 0X00000010 | 1 | 0 | 1 | 0 | 0 | 0 | 0 | 0 | 0 | 1 | 0 | 0 | 0 | 0 | 0 | 0 | 1 | 0 | 1 | 0 | 0 | 0 | 1 | 0 | 1 | 0 | 1 | 0 | 0 | 0 |

FIG. 6C

FIG. 6D

616

| 0X00000010 | 1 | 0 | 1 | 0 | 0 | 0 | 0 | 0 | 0 | 1 | 0 | 0 | 0 | 0 | 0 | 0 | 1 | 0 | 1 | 0 | 0 | 0 | 1 | 0 | 1 | 0 | 1 | 0 | 0 | 0 |

OR

622

| 0X0000001C | 0 | 1 | 0 | 1 | 0 | 1 | 0 | 0 | 0 | 1 | 0 | 0 | 0 | 1 | 0 | 1 | 0 | 1 | 0 | 1 | 0 | 1 | 0 | 0 | 0 | 1 | 0 | 0 | 0 | 1 | 0 | 1 |

624

| 0X00000020 | 1 | 1 | 1 | 1 | 0 | 1 | 0 | 0 | 0 | 1 | 1 | 0 | 0 | 1 | 0 | 1 | 0 | 1 | 1 | 1 | 1 | 1 | 0 | 0 | 1 | 1 | 1 | 0 | 1 | 1 | 0 | 1 |

FIG. 6E

610

| 0X00000000 | 0 | 1 | 1 | 1 | 1 | 0 | 0 | 1 | 1 | 0 | 1 | 1 | 1 | 0 | 0 | 1 | 1 | 1 | 1 | 1 | 0 | 0 | 1 | 1 | 0 | 1 | 1 | 1 | 0 | 0 | 1 |

AND

612

| 0X00000008 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 |

628

| 0X0000002C | 0 | 1 | 0 | 1 | 0 | 0 | 0 | 1 | 0 | 0 | 0 | 1 | 0 | 0 | 0 | 1 | 0 | 1 | 0 | 1 | 0 | 0 | 0 | 1 | 0 | 0 | 0 | 1 | 0 | 0 | 0 | 1 |

SHIFT

630

| 0X00000030 | 1 | 0 | 1 | 0 | 0 | 0 | 1 | 0 | 0 | 0 | 1 | 0 | 0 | 0 | 1 | 0 | 1 | 0 | 1 | 0 | 0 | 0 | 1 | 0 | 0 | 0 | 1 | 0 | 0 | 0 | 1 | 0 |

FIG. 6F

EP 4 521 232 A1

610

0X00000000 | 0 1 1 1 1 0 0 1 1 0 1 1 1 0 0 1 1 1 1 1 1 0 0 1 1 0 1 1 1 0 0 1

AND

618

0X00000014 | 1 0 1 0 1 0 1 0 1 0 1 0 1 0 1 0 1 0 1 0 1 0 1 0 1 0 1 0 1 0 1 0

634

0X00000038 | 0 0 1 0 1 0 0 1 0 1 0 1 0 0 0 1 0 1 0 1 0 0 0 1 0 1 0 1 0 0 0

SHIFT

636

0X0000003C | 0 0 0 1 0 1 0 0 0 1 0 1 0 1 0 0 0 1 0 1 0 1 0 0 0 1 0 1 0 1 0 0

FIG. 6G

EP 4 521 232 A1

630

| 0X00000030 | 1 | 0 | 1 | 0 | 0 | 0 | 1 | 0 | 0 | 1 | 0 | 0 | 0 | 1 | 0 | 1 | 0 | 1 | 0 | 0 | 0 | 1 | 0 | 0 | 0 | 1 | 0 | 0 | 0 | 1 | 0 |

OR

636

| 0X0000003C | 0 | 0 | 0 | 1 | 0 | 1 | 0 | 0 | 1 | 0 | 1 | 0 | 1 | 0 | 0 | 0 | 1 | 0 | 1 | 0 | 1 | 0 | 0 | 0 | 1 | 0 | 1 | 0 | 1 | 0 | 0 |

638

| 0X00000040 | 1 | 0 | 1 | 1 | 0 | 1 | 1 | 0 | 0 | 1 | 1 | 0 | 1 | 1 | 0 | 1 | 1 | 1 | 0 | 1 | 1 | 0 | 0 | 1 | 1 | 1 | 0 | 1 | 1 | 0 |

FIG. 6H

EP 4 521 232 A1

| 0X00000020 | 1 | 1 | 1 | 1 | 0 | 1 | 0 | 0 | 0 | 1 | 1 | 0 | 0 | 1 | 0 | 1 | 0 | 1 | 1 | 1 | 1 | 1 | 0 | 0 | 1 | 1 | 1 | 0 | 1 | 1 | 0 | 1 |

⌐ 624

XOR

| 0X00000040 | 1 | 0 | 1 | 1 | 0 | 1 | 1 | 0 | 0 | 1 | 1 | 0 | 1 | 1 | 0 | 1 | 1 | 1 | 0 | 1 | 1 | 0 | 0 | 1 | 1 | 1 | 0 | 1 | 1 | 0 |

⌐ 638

| 0X00000044 | 0 | 1 | 0 | 0 | 0 | 1 | 0 | 0 | 0 | 1 | 0 | 0 | 1 | 1 | 0 | 0 | 0 | 1 | 0 | 1 | 0 | 1 | 0 | 0 | 1 | 1 | 0 | 1 | 1 |

⌐ 640

FIG. 6I

**Europäisches Patentamt**
**European Patent Office**
**Office européen des brevets**

# EUROPEAN SEARCH REPORT

**Application Number**

EP 24 19 5503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN CONG ET AL: "Masking Large Keys in Hardware: A Masked Implementation of McEliece", 12 August 2015 (2015-08-12), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 293 - 309, XP047359179, ISBN: 978-3-540-74549-5 * Section 3.2 * | 1-8 | INV. G06F7/58 G06F7/76 H04L9/00 |
| A | CORON JEAN-SÉBASTIEN ET AL: "Secure Conversion between Boolean and Arithmetic Masking of Any Order", 23 September 2014 (2014-09-23), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 188 - 205, XP047491223, ISBN: 978-3-540-74549-5 * Section 5, Algorithm 6, 7 * | 1-8 | |
| A | US 2022/399883 A1 (FAY BJÖRN [DE]) 15 December 2022 (2022-12-15) * paragraph [0025] - paragraph [0028] * | 1-8 | TECHNICAL FIELDS SEARCHED (IPC) G06F H04L |

The present search report has been drawn up for all claims

| Place of search | Date of completion of the search | Examiner |
|---|---|---|
| Munich | 15 January 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 5503

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | Publication date | Patent family member(s) | | Publication date |
|---|---|---|---|---|
| US 2022399883 A1 | 15-12-2022 | CN | 115459746 A | 09-12-2022 |
| | | EP | 4102355 A1 | 14-12-2022 |
| | | US | 2022399883 A1 | 15-12-2022 |

EPO FORM P0459

For more details about this annex : see Official Journal of the European Patent Office, No. 12/82